# EUROPÄISCHE PATENTSCHRIFT

(11) **EP 0 305 654 B1**
(45) Veröffentlichungstag und Bekanntmachung des Hinweises auf die Patenterteilung: **10.02.1993**
(21) Anmeldenummer: 88108596.3
(22) Anmeldetag: 30.05.1988
(51) Int. Cl.: B60R 21/32

(54) **Einrichtung zur Auslösung einer Sicherheitsvorrichtung**
Safety system triggering device
Dispositif de déclenchement d'un système de sécurité

(30) Priorität: 31.08.1987 DE 3729019
(43) Veröffentlichungstag der Anmeldung: 08.03.1989
(73) Patentinhaber: TEMIC TELEFUNKEN microelectronic GmbH, 74072 Heilbronn (DE)
(72) Erfinder: Spies, Hans, D-8068 Pfaffenhofen (DE); Wöhrl, Alfons, D-8898 Schrobenhausen (DE); Hora, Peter, D-8899 Edelhausen (DE); Laucht, Horst, Dr., D-8206 Bruckmühl (DE)
(74) Vertreter: Maute, Hans-Jürgen, Dipl.-Ing.

(56) Entgegenhaltungen:
- EP-A- 0 027 747
- GB-A- 2 171 518
- US-A- 4 550 604
- PATENT ABSTRACTS OF JAPAN, Band 10, Nr. 271 (P-497)[2327], 16. September 1986;& JP-A-61 95 218 (NISSAN MOTOR CO. LTD) 14-05-1986

## Beschreibung

Die Erfindung bezieht sich auf eine Einrichtung zur Auslösung einer Sicherheitsvorrichtung in Form einer Rückhalteeinrichtung in Kraftfahrzeugen gemäß dem Gattungsbegriff des Anspruchs 1.

Solche Einrichtungen sind in verschiedenen Ausführungsformen bekannt. So offenbart beispielsweise die DE-OS 22 07 831 einen Aufprallsensor der bei einem Aufprall des Fahrzeugs auf ein Hindernis die passive Sicherheitseinrichtung aktiviert. Eine Prüfschaltung für so einen Aufprallsensor wurde von der Anmelderin vorgeschlagen (P 37 06 765.6) bei der ein elektroakustischer Wandler als Teils der Prüfschaltung angeordnet ist, der mit einem Beschleunigungsfühler akustisch gekoppelt ist. Hiermit soll eine vereinfachte Prüfung des Aufprallsensors erreicht werden und die Konzeption ist so gehalten, daß auch gleichzeitig eine einfache Anzeige der Funktionstüchtigkeit gegeben ist.

Der vorliegenden Erfindung liegt die Aufgabe zugrunde, eine Einrichtung der eingangs genannten Art zu schaffen, mit der nicht nur ein Aufprall auf Hindernisse sondern auch sonstige entsprechende Geräusche und Störungen bei kritischen Fahrbedingungen unterschieden und ausgewertet werden können. Dies ist mit den bisher bekannten Konzeptionen nicht möglich.

Diese Aufgabe wird durch die im Anspruchs 1 aufgezeigten Maßnahmen gelöst. In den Unteransprüchen sind Weiterbildungen und Ausgestaltungen angegeben und in der nachfolgenden Beschreibung wird ein Ausführungsbeispiel erläutert und in den Figuren der Zeichnung skizziert. Es zeigen:
- Fig. 1: ein Blockschaltbild des nachfolgend beschriebenen Ausführungsbeispiels in schematischer Darstellung,
- Fig. 2: eine Diagrammskizze der Schallsignale der Körperschallsensoren und der Verzögerungssignale der Beschleunigungsaufnehmer des Auslösesensors.

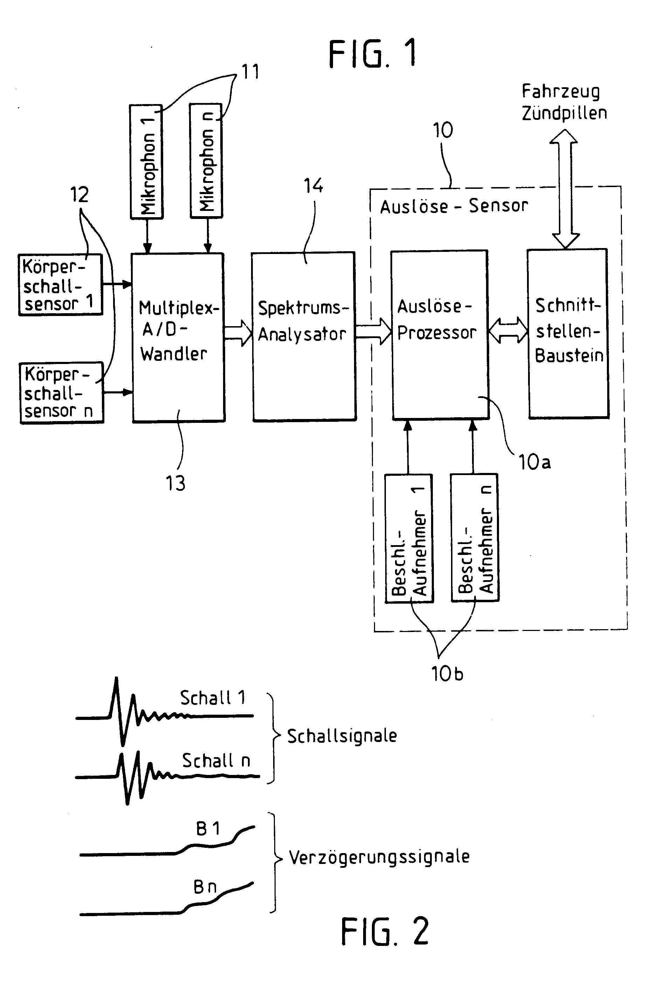

Dem Auslösesensor 10 - wie er in Fig. 1 skizziert ist - wird eine Einrichtung zugeordnet, die sich aus Körperschallsensoren 12, einem Multiplex-A/D-Wandler 13 und einem Spektrums-Analysator 14 zusammensetzt. Dieser Einrichtung können nun noch zusätzlich Schallsensoren in Form von Mikrophonen 11 beigegeben werden, wodurch diese Einrichtung positiv sensibilisiert wird. Vorzugsweise werden hierfür sogenannte Richtmikrophone eingesetzt.

Der oder die Körperschallsensoren 12 detektieren den auftretenden Körperschall und geben ihre Signale an den Multiplex-A/D-Wandler 13, der die digital gewandelten Signale an einen Digital-Spektrum-Analyser 14 weiterleitet. Dieser ermittelt nun aus den akustischen Leistungsspektren - wie sie in Figur 2 skizziert sind - den Frequenzinhalt und die Leistungsdichte pro Frequenz, sowie den Phasenunterschied zwischen den Signalen und ermittelt daraus Richtung und Art des Aufpralls und gibt die gewonnenen Informationen an den Auslöseprozessor 10a des Auslösesensors 10 weiter. Damit ist eine Einrichtung zur Auslösung einer Sicherheitsvorrichtung geschaffen, die in ihrer Zuverlässigkeit erhöht und in ihrer Signaltechnik wesentlich verfeinert worden ist.

## Patentansprüche

1. Einrichtung zur Auslösung einer Sicherheitsvorrichtung in Form einer Rückhalteeinrichtung in Kraftfahrzeugen, die mit einem Auslösesensor für die Aktivierung dieser Sicherheitsvorrichtung versehen ist und der Sensor mit sogenannten Beschleunigungsaufnehmern bestückt ist, **dadurch gekennzeichnet,** daß dem Auslösesensor (10) Schall- und/oder Körperschallsensoren (12) zugeordnet sind, die ihre Signale einem analog oder digital aufgebautem Spektrum-Analysator (14) zuführen, der die ausgewählten und gewandelten Signale dem Auslöseprozessor (10a) des Auslösesensors (10) zuführt.

2. Einrichtung nach Anspruch 1, **dadurch gekennzeichnet,** daß als Schallsensoren Richtmikrophone (11) zur Raumüberwachung angeordnet sind.

3. Einrichtung nach Anspruch 1 oder 2, **dadurch gekennzeichnet,** daß ein oder mehrere Körperschallsensoren (12) in Form von Körperschallaufnehmer angeordnet sind,

4. Einrichtung nach den Ansprüchen 1 - 3, **dadurch gekennzeichnet,** daß zwischen dem Multiplex-A/D-Wandler (13) und dem Auslöseprozessor (10a) des Auslöse-Sensors (10) der Spektrum-Analyser (14) zur Ermittlung der Richtung und der Art des Aufpralls angeordnet ist.

## Claims

1. Device for triggering a safety device in the form of a detention device in motor vehicles, which is provided with a triggering sensor for activation of this safety device and the sensor is equipped with so-called acceleration pickups, **characterised in that** the triggering sensor (10) is associated with sound and/or vibration sensors (12) which feed their signals to an analog or digital spectrum analyser (14) which feeds selected and converted signals to the triggering processor (10a) of the triggering sensor (10).

2. Device according to claim 1, **characterised in that** directional microphones (11) as vibration sensors are arranged for spatial monitoring.

3. Device according to claim 1 or 2, **characterised by** the arrangement of one or more vibration sensors (12) in the form of vibration pickups.

4. Device according to claims 1 - 3, **characterised in that** a spectrum analyser (14) for determining the direction and type of impact is arranged between a multiplex-A/D converter (13) and a triggering processor (10a) of the triggering sensor (10).

## Revendications

1. Dispositif de déclenchement d'un système de sécurité se présentatnt sous la forme d'un dispositif de retenue dans des véhicules automobiles, dispositif qui est pourvu d'un détecteur de déclenchement pour l'activation dudit système de sécurité, le détecteur de déclenchement comportant des capteurs dits d'accélération, caractérisé par le fait que des capteurs de bruit et/ou des capteurs sismiques (12) sont associés au détecteur de déclenchement (10), lesquels capteurs délivrent des signaux à un analyseur de spectre (14) analogique ou numérique qui envoie les signaux sélectionnés et transformés au processeur (10a) de déclenchement du détecteur de déclenchement (10).

2. Dispositif selon la revendication 1, caractérisé par le fait qu'il comporte des microphones (11) directifs comme capteurs de bruit pour la surveillance de l'espace.

3. Dispositif selon la revendication 1 ou 2, caractérisé par le fait qu'il comporte un ou plusieurs capteurs sismiques (12) agencé sous forme de détecteurs de bruits de structure.

4. Dispositif selon les revendications 1 à 3, caractérisé par le fait que, pour déterminer la direction et le type de choc, l'analyseur de spectre (14) est monté entre le convertisseur A/N multiplexeur (13) et le processeur de déclenchement (10a) du détecteur de déclenchement.
